# EUROPEAN PATENT SPECIFICATION

(11) **EP 1 277 341 B1**
(45) Date of publication and mention of the grant of the patent: **16.06.2004**
(21) Application number: 01923136.4
(22) Date of filing: 05.04.2001
(51) Int. Cl.: H04N 7/16

(54) **SYSTEM AND METHOD FOR DIGITAL BROADCAST AUDIO CONTENT TARGETING**
VORRICHTUNG UND VERFAHREN FÜR DIGITALEN RUNDFUNK MIT GEZIELTEM TONINHALT
SYSTEME ET PROCEDE DE CIBLAGE DE CONTENU AUDIO DE RADIODIFFUSION NUMERIQUE

(30) Priority: 13.04.2000 US 548458
(43) Date of publication of application: 22.01.2003
(73) Proprietor: Qvc, Inc., West Chester, PA 19380 (US)
(72) Inventor: LINK, John, F., Malvern, PA 19335 (US); GRAVES, George, A., Bala Cynwyd, PA 19004 (US); ENDLER, George, III., Downingtown, PA 19335 (US); BROWN, Thomas, A., West Chester, PA 19380 (US)
(74) Representative: Hertz, Oliver, Dr.
(86) International application number: PCT/US2001/010987
(87) International publication number: WO 2001/080564

(56) References cited:
- WO-A-97/23996
- WO-A-99/52285
- US-A- 5 861 881

## Description

### FIELD OF THE INVENTION

The invention pertains to the field of cable television advertising, and more particularly, to a system and method for providing customized commercial audio content to respective cable system viewers corresponding to a single commercial video content.

### BACKGROUND OF INVENTION

The simplest method for advertisers to promote their goods or services is to select when, which channel and how often (and within budget) their advertisements are played out over the cable system. The proper selection of when, how often and on which channel these advertisements are played out will hopefully accomplish the advertiser's goal of "grabbing" the attention of viewers who are the most likely to be interested in their products or services.

A further improvement to this time/frequency/channel limited transmission of advertisements is the determination of target viewers, i.e., determining distinct groups of viewers based on a range of factors including age, socio-economics, etc., and then routing those advertisements to selective target groups based on these factors. Systems and methods for determining target groups among viewers are known in the art and there are databases that provide such information in the form of cluster codes. Cluster codes are mathematical groupings of the viewing population such that there is a demographic segmentation of the viewing population based on socio-economic factors.

Utilizing target groups or target data based on cluster codes and the like, and/or using input responses from viewers themselves, the following systems/methods are directed towards routing particular advertisements, or video programs, or messages to particular viewers:
U.S. Patent No. 5,636,346 (Saxe) discloses a system/method for selectively targeting advertisements and programming.
U.S. Patent No. 5,761,601 (Nemirofsky et al.) discloses a video distribution system/method for delivering customized video programs for particular target audiences or markets such that the series of programs played in one receiving site can be different from that played in another site.
U.S. Patent No. 5,758,257 (Herz et al.) discloses a system and method for scheduling broadcast of and access to video programs and other data relating to customer profiles.
U.S. Patent No. 5,446,919 (Wilkins) discloses a system/method for the selective transmission of a message to subscribers of a cable television service.
U.S. Patent No. 5,758,258 (Shoff et al.) discloses a system for the selective delivery of programming for interactive televideo. The system is responsive to user inputs.
U.S. Patent No. 5,410,344 (Graves et al.) discloses a system/method for automatically selecting video programs based on viewers' preferences.
U.S. Patent No. 5,652,615 (Bryant et al.) discloses a system/method for a broadcasting network whereby programs are distributed to targeted customer premises equipment. A broadcaster or cable operator generates base segments of a continuing program and where the base segments have a content which is identified. The broadcaster or cable operator also generates shorter fill segments which are used as filler during interruptions in the regular continuing program. The fill segments also have their content identified. Some of the fill segments are concurrently generated to have different content. The base and fill segments are broadcast over the network to the customers' equipment. While being broadcast or transported, the base and fill segments are selectively merged to form the continuing program where the base and fill segments are temporarily adjacent and the signals of the merged segments are synchronized to a common time base. The selection of the segments for merging is responsive to the identities of the content of the base and fill segments, and demographics of the network and customer equipment.

Ideally, such systems/methods would be able to switch between different commercials for a particular cable television channel such that one target group watching that channel receives a first commercial advertisement while a second target group simultaneously receives a different commercial advertisement while watching that same channel, etc. The following U.S. patents are directed to that objective:
U.S. Patent No. 5,774,170 (Hite et al.) discloses a system/method which utilizes a commercial identifier (CID) that is appended to every commercial broadcast. A commercial processor (CP) at the point of usage analyses incoming CIDs and if it finds a match between an incoming CID and a consumer CID code stored at the point of usage, the particular advertisement is played out.
U.S. Patent No. 5,155,591 (Wachob) discloses a system/method for broadcasting different commercial messages to different demographically targeted audiences in a cable television system or the like. A first television channel contains television programs and periodic commercial messages while a second television channel contains alternate commercial messages while a second television channel contains alternate commercial messages. Demographic characteristics of a viewer are identified, and commercial messages are selectively provided from the first or second channel, depending upon the viewer's demographic characteristics.
U.S. Patent No. 5,231,494 (Wachob) discloses system/method whereby a plurality of television signals are transmitted and selectively received on a single television channel allocation. Headend apparatus compresses a set of television signals, such as a main program signal and a plurality of different demographically targeted commercials. These signals are combined into a single signal and transmitted. A receiver receiving the combined signal identifies characteristics of a television viewer and selects a particular one of the signals from the combined signal depending upon viewer characteristics.

However, although it would be desirable to switch between a plurality of alternative commercial advertisements for any one cable channel, the bandwidth limitations of the channel may support only two alternative advertisements. That is, the video portion of each alternative advertisement occupies the majority of the bandwidth and, as a result, the channel can only support two video and their corresponding audio portions.

WO99/52285 uses a plurality of channels (see Fig. 32) to convey a plurality of different advertisements, which include both video and audio, to viewers. A default advertisement is incorporated into the primary programming. Feeder advertisements are available on feeder channels. If a feeder advertisement is appropriate for the set top box, then the set top box tunes to a feeder channel and then tunes back to the primary channel. In particular, this system presents a specific advertisement to any particular subscriber based on the group label the subscriber has been assigned by the cable company; the preferred audience identified for the advertisement; the category (e.g., sports, news, comedy, etc.) of the channel that the subscriber is tuned to. The set top box is provided with a switching plan that specifies which advertisement a set top box in a particular group should present at a given time based on three criteria above.

WO 97/23996 (Bramwell) teaches a system which is directed towards long form programming (sitcoms, news shows, movies, etc.) and requires the subscriber to specify viewing 'rating levels' for offensive video and audio akin to what is used for films (G, PG, R, etc.). Bramwell assumes video content will be correspondingly tagged with 'rating levels'. The set top box will have an application which compares the content rating to the subsriber specified rating and will take appropriate action when two ratings specifications are imcompatible. Actions include blocking video and/or audio, masking portions of video,"bleeping" audio, or replacing audio (words, phrases, sentences) with separate audio with a lesser rating.

Thus, there remains a need for a system and method that can provide simultaneous, multiple advertisement experiences that can meet the bandwidth limitations of conventional cable channels and without requiring viewers' input to receive their particular advertisement experience.

### OBJECTS OF THE INVENTION

Accordingly, it is the general object of this invention to provide an invention that overcomes the disadvantages of the prior art.

It is an object of the present invention to provide a system and method for providing simultaneous, multiple advertisement experiences for viewers in a cable system.

It is still yet a further object of the present invention to provide a system and method for automatic simultaneous, multiple advertisement experiences for viewers in a cable system.

It is still yet another object of the present invention to provide a system and method for providing customized-consumer audio layouts for a particular video asset to viewers on a cable system.

It is yet another object of the present invention to provide a system and method for providing customized-consumer audio playouts for a particular video asset to viewers without requiring active viewer input.

It is yet even a further object of the present invention to provide a system and method providing customized-consumer audio playouts for a particular video asset to viewers that is updated based on viewer demographics without the need for active viewer input.

### SUMMARY OF THE INVENTION

These and other objects of the instant invention are achieved by providing an audio content targeting system for providing multiple, concurrent audio tracks with a video asset to viewers in a digital broadcast cable television system operated by a cable operator, the video asset comprising an advertisement. The audio content targeting system comprises:
primary channel asset preparation means for inserting a plurality of audio tracks and corresponding viewer target group identification numbers in the video asset, independent of the cable operator, to form a cable signal, said primary channel asset preparation means being coupled to the cable television system;
at least one set top box having a predetermined viewer target group identification number stored therein.
The at least one set top box is coupled to the cable television system for receiving said cable signal.
The at least one viewer set top box comprises an application program that automatically interrogates said cable signal and then compares said predetermined viewer target group identification number with said corresponding viewer target group identification numbers in said cable signal to select which audio track to playout with the video asset.
These and other objects of the instant invention are also achieved by providing a method for providing multiple, concurrent audio tracks with a video asset to viewers in a digital broadcast cable television system, operated by a cable operator, the video asset comprising an advertisement. The method comprises the steps of:
generating viewer target group identification numbers from available commercial databases regarding viewers; inserting a plurality of audio tracks with viewer target group identification numbers in the video asset, independent of the cable operator, to form a cable signal;
associating each of said plurality of audio tracks with at least one of said viewer target group identification numbers in said cable signal;
providing each viewer with a set top box having a single viewer target group identification number that corresponds to that viewer and storing said single viewer target group identification number in said set top box;
transmitting said cable signal over the digital broadcast cable television system for receipt by each of said set top boxes; and
each of said set top boxes comparing said viewer target group identification numbers in said received cable signal with its respective single viewer identification number to select one of said plurality of audio tracks to play out with the video asset.

### DESCRIPTION OF THE DRAWINGS

Other objects and many of the attendant advantages of this invention will be readily appreciated as the same becomes better understood by reference to the following detailed description when considered in connection with the accompanying drawings wherein:
Fig. 1 is an operational block diagram of the present digital broadcast audio content targeting system/method;
Fig. 2 is a flowchart for a program employed by the special purpose program; and
Fig. 3 is a flowchart of how the target group identification data is developed and then transferred to every digital set top box and to the primary channel asset preparation means and the companion channel asset preparation means.

### DETAILED DESCRIPTION OF THE PREFERRED EMBODIMENT

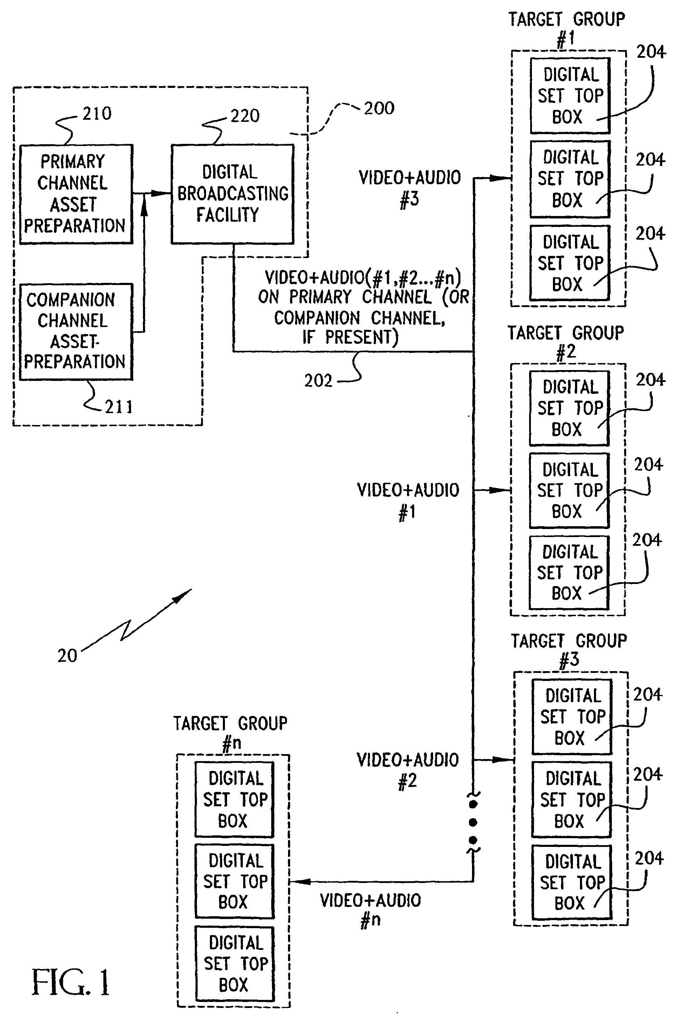

Referring now in detail to the various figures of the drawing wherein like reference characters refer to like parts, there is shown at 20 in Fig. 1, a system for digital broadcast audio content targeting (hereinafter "DBACT"), embodiment of the present invention. This system 20 represents a system and method for delivering targeted audio streams via a digital broadcast network for a given video asset. As will be described in detail below, the system and method enable the delivery of multiple, concurrent audio streams with a specific video asset to viewers on a digital broadcast system.

An important feature of the system/method is the creation of a target group identification data for identifying specific cable set top boxes using a system/method such as the one described in A. S. N. 09/280, 035 (US 6 289 514) entitled SYSTEM & METHOD FOR THE NEAR-REAL TIME CAPTURE & REPORTING OF LARGE POPULATION CONSUMER BEHAVIORS CONCERNING TELEVISION USE, filed on March 29, 1999, which is assigned to the same Assignee as the present invention, namely QVC, Inc. The target group identification data is based on the characteristics of particular consumers (e. g., demographic, psychographic, lifestyle or behavioral characteristics). Once particular target group identification indicia (e. g., a target group identification number) are stored in respective cable set top boxes, the special purpose application program in each cable set top box then monitors the incoming digital signal to determine (1) if there are alternative audio channels available (with respect to the default audio channel known as the "primary" audio channel) and, if so, (2) based upon the particular target group identification indicia stored in a particular cable set top box, which audio channel will be selected to "play out" with the video asset. The distinguishing feature over conventional broadcast systems is that in the DBACT system 20 there is no selection, or interaction, by the user, i. e., the pertinent audio channel selection is automatic with no input/action from the user; rather, the audio stream that any specific viewer receives is based on, in particular, the target group identification data stored in the STB 204; and the target group identification data is predetermined for that viewer based on the characteristics of that consumer (e. g, demographic, psychographic, lifestyle or behavioral characteristics).

As an example (and not by way of limitation) of the operation of the present invention, the video asset may comprise a new mid-size car advertisement with one audio track emphasizing the luxury features of the car while another audio track provides particular details about the cost and financing available. The video asset with the audio track emphasizing the luxury features is then played out at the television sets of those viewers having a target group identification number that corresponds to people interested in luxury car features while that same video asset with the audio track emphasizing the cost and financing available is played out at the television sets of those viewers having a target group identification number that corresponds to people who consider car cost/financing as the utmost concern.

It should be understood that without using the DBACT system 20, a typical asset comprises a single video portion and a default (primary channel) audio track. Thus, this combination of a single video portion and default audio track form a "single advertisement experience" that is presented to every STB in the cable system. To offer another or different advertisement experience, it is necessary to broadcast another entire asset having its own video portion and default audio track. This manner of providing multiple advertisement experience is costly and, as a result, the DBACT system 20 provides a solution, as will be discussed below.

As shown in Fig. 1, the DBACT 20 comprises a digital broadcast channel means 200. The digital broadcast channel means 200 depicts two approaches of digital broadcasting depending on the digital broadcast channel capacity environment. It should be understood that either approach generates the same result.

The first approach is depicted by the path including primary channel asset preparation means 210 and digital broadcasting facility 220. This first approach is appropriate for environments where digital broadcast channel capacity is at a premium and/or where there are few distinct and targeted audio streams for a given asset. The primary channel asset preparation means 210 is the process which inserts additional audio tracks and target group identification numbers into a digital video asset. During this insertion, the primary channel asset preparation means 210 also associates specific audio tracks with particular target group identification numbers in the encoded instructions that are embedded into the asset stream. As will be discussed later, upon receipt of the cable signal, the STB 204 special purpose application decodes these instructions to determine (1) if there are altemative audio tracks available and (2) if so, which audio track to play out. The actual hardware/software that inserts the additional audio tracks and target group identification data is widely used in production of analog and digital video assets. The devices which provide this function are available from companies such as AVID Technologies, Inc. of Tewksbury, MA. The digital broadcast facility 220 contains the equipment and staff required to deliver digital media streams to a collection of homes and businesses. This is a common facility in the cable and satellite television industry.

The second approach is depicted by the path primary channel asset preparation means 210, companion channel asset preparation means 211 and digital broadcasting facility 220. The second approach is appropriate for environments where digital broadcast channel capacity is more readily available and there are many distinct and targeted audio streams for a given asset. The companion channel asset preparation means 211 is a process which also inserts even more audio tracks and the target group information numbers into a digital asset. As with the primary channel asset preparation means 210, the companion channel asset preparation means 211 also associates specific audio tracks with particular target group identification numbers in the encoded instructions that are embedded into the asset stream. As also with the primary channel asset preparation means 210, the hardware/software used in the companion channel asset preparation means 211 is widely used in production of analog and digital video assets. The devices which provide this function are available from companies such as AVID Technologies, Inc. of Tewksbury, MA.

Typically, an asset comprises a video content and as many as four audio variance (i.e, tracks), without visibly degrading the video portion. The output of the primary channel asset preparation means 210 is an electronic file with one video track and four (or five) audio tracks. With regard to the companion channel asset preparation means 211, the output of that is typically a digital channel with a plurality of audio tracks (e.g., 1 - 80) but no video track. As a result of the absence of a video track (which occupies a large portion of the bandwidth), the companion channel can carry a large number of audio tracks.

At this point, it should be understood that advertisers provide the demographic cluster information to the primary channel asset preparation stage 210 and the companion channel asset stage 211 which correlates target group indicia (of the viewing population) to different audio tracks. These data form a portion of the encoded instructions discussed above. However, despite this information being encoded in current asset preparation, it is only the DBACT system 20 that utilizes this encoded correlation of target group indicia and the multiple audio tracks to provide "multiple advertisement experiences" utilizing a common video portion.

The digital broadcast channel means 200 is connected to the cable network 202 (which includes the conventional components of a cable network including the headend, etc.). Furthermore, the destination end of the cable network 202 are individual digital set top boxes (STB) 204. The STB 204 is a device which allows the viewer to tune his/her television while connected to a cable/satellite TV network. These devices are commercially available from companies such as General Instrument of Horsham, PA and Scientific Atlanta of Norcross, GA.

The present invention 20 utilizes a special purpose application for each STB 204 which presents audio tailored to the individual set top box user (or groups of users) combined with the presentation of conventional video assets. In general, the special purpose application looks at the incoming cable signal (viz., the advertisement) and then determines which audio content to playout with the video portion, in accordance with the corresponding target group number, as will be discussed below. As shown in Fig. 1, depending upon the target group identification number stored in a particular STB 204, each target group (#1, #2... #n) receives an appropriate audio portion (e.g., target group #1 receives audio track #3, target group #2 receives audio track #1, etc.,) plus the common video portion of the advertisement.

The special purpose application, stored within the memory of each STB 204 is a software program written in language and using function calls which are specific to the individual set top box manufacturer and model.

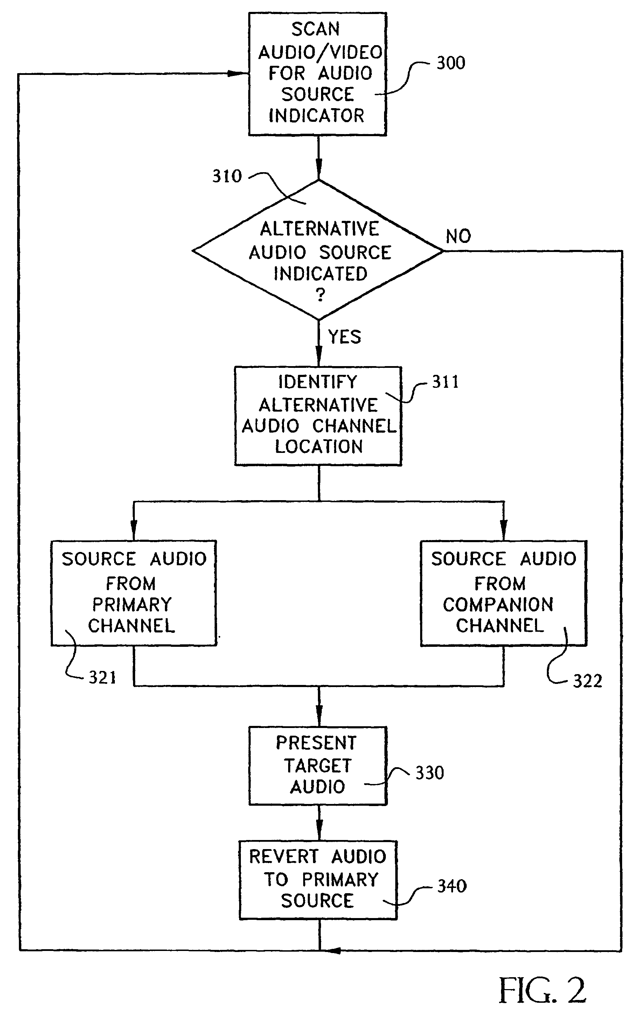

The method employed by the special purpose application is depicted in Fig. 2. In particular, in the first step 300, the special purpose application scans the audio/video signal from the cable network 202 for an audio source indicator. This process 300 monitors the incoming video and/or audio signals received by the STB 204, "watching" or "listening" for any of a number of standard conventions which indicate the start of an asset. When a new asset is recognized, that asset stream is interrogated by the special purpose application to determine if the asset contains encoded instructions concerning use of alternate audio tracks. It is in these instructions where specific audio tracks, both in the primary channel and the companion channel (if included), are assigned to particular target identification number.

In step 310, the special purpose program determines whether an alternative audio source is indicated. That is, this process 310 determines whether a broadcast asset is enabled with alternative audio or not. If an affirmative result is obtained, step 311 begins a procedure to identify the alternative audio channel location. If a negative result is obtained, step 310 returns the special purpose application to step 300.

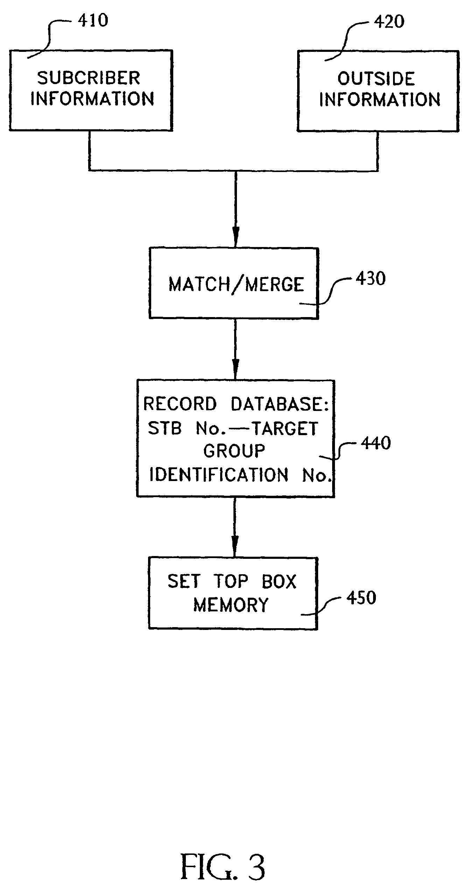

Once the identify alternative audio channel location step 311 is initiated, that step determines the location of altemative audio based on individual STB target group identification number, as will be discussed below (see Fig.3 for methods for individual STB target group identification). Step 311 compares the target identification number, stored within the STB 204, with the assignment in the encoded instructions; if there is a target identification number match, the STB 204 now knows which audio track to playout; if there is no match, the STB 204 defaults to playing out the default audio track (typically, the first audio track) in the primary channel.

The source audio from primary channel step 321 identifies and sources audio from the primary channel track dependant on the audio track identified in step 311. The source audio from companion channel step 322 identifies and sources audio from the companion channel end track dependent on the companion and track identified in step 311. The present target audio step 330 causes audio from step 321 or 322 to be presented. The revert audio to primary source step 340, at the completion of the audio asset playout, returns the audio channel and track identifiers to default settings; step 340 then returns the process to step 300.

As stated previously, the special purpose application of this invention 20 utilizes individual STB target group identification data for determination of the location of alternative audio. The target group identification data is maintained in memory on each individual set top box 204 serviced through a broadcast cable/satellite system. The data may be resident through "other" processes (e.g., the cable/satellite company may have already identified and specified this data through another procedure) or, may be populated to the individual STB 204 through a method such as that depicted in Fig. 3.

In particular, subscriber information is gathered/stored in step 410 and is used to develop the target group identification data. The subscriber information gathered in step 410 may be stored in a database of cable/satellite company customers names, addresses and STB identification numbers (e.g., billing data files that is managed by the cable television company). In addition, outside information is also gathered/stored in step 420 and may also be used in developing the target identification data; the outside information of step 420 may comprise data and information commonly available from commercial vendors regarding individuals demographic, psychographic, lifestyle and/or behavioral characteristics all of which are stored in files.

All of this data is then matched and merged as indicated by process 430. This process 430 matches information from steps 410 and 420 and generates a file containing a single record of data which is the combination of the subscriber information from step 410 and the outside information from step 420. This procedure is common in the list enhancement industry.

A record/database is developed in step 440 which contains an individual STB identification number and a target group data defined through manipulation or adoption of codes in process 430. This record/database development in step 440 is similar to conventional clustering data bases which retain all of this information and frequently update this information; an example of such a clustering data base operation is disclosed in A.S.N. 09/280,035, mentioned above.

Finally, in process 450, the record/database developed in step 440 delivers particular target group identification data to each of the STBs 204 in the system. The STB 204 maintains its target group identification data in its memory. Once stored in the memory, the special purpose application is ready to interrogate any asset stream received by the STB 204, as discussed previously with regard to Fig. 2.

Processes for updating and/or re-certifying target group identification data assure timeliness and availability of these data in the event of changes and/or system outages. Thus, should any of the information gathered in steps 410 and 420 change, and new target identification data be generated, the STBs 204 are updated accordingly. Based on the above, it should be appreciated that the viewer does not require any "active" participation in the DBACT system 20 in order for it to operate. In other words, details about individual viewers are collected in the normal course of business (including any changes, e.g., address changes, etc.) and this information is used to generate the most current target group identification data that is then stored in the individual viewer's STB 204. The viewer does not have to make any channel selection, or any type of television/cable STB input to obtain his/her customized audio track for a particular video asset. Rather, the viewer simply watches the asset when it is transmitted and the DBACT system 20 does the rest. Therefore, use of the term "active" in this application means that the viewer does not have to interact with the DBACT system 20 to obtain the customized audio.

## Claims

1. An audio content targeting system for providing multiple, concurrent audio tracks with a video asset to viewers in a digital broadcast cable television system (202) operated by a cable operator, said video asset comprising an advertisement, said audio content targeting system comprising:
primary channel asset preparation means (210) for inserting a plurality of audio tracks and corresponding viewer target group identification numbers in the video asset, independent of the cable operator, to form a cable signal, said primary channel asset preparation means (210) being coupled to the cable television system (202);
at least one set top box (204) having a predetermined viewer target group identification number stored therein,
said at least one set top box (204) being coupled to the cable television system (202) for receiving said cable signal;
said at least one viewer set top box (204) comprising an application program that automatically interrogates said cable signal and then compares said predetermined viewer target group identification number with said corresponding viewer target group identification numbers in said cable signal to select which audio track to playout with the video asset.

2. The audio content targeting system according to claim 1, further comprising companion channel asset preparation means (211), said companion channel asset preparation means (211) inserting additional audio tracks and said corresponding viewer target group identification numbers in the video asset to form said cable signal and wherein said application program compares said predetermined viewer target group identification number with said corresponding viewer target group identification numbers in said cable signal to select one of said audio tracks and said additional audio tracks to playout with the video asset.

3. The system of Claim 1 further comprising means for generating said predetermined viewer target group identification number, said generating means being coupled to said at least one set top box (204) for transmitting said predetermined viewer target group identification number to said at least one viewer set top box (204).

4. The system of Claim 3 wherein said generating means updates said predetermined viewer target group identification number from available commercial databases.

5. The system of Claim 1 wherein said application program in said at least one viewer set top box (204) selects an audio track to playout with the video asset without requiring viewer intervention.

6. A method for providing multiple, concurrent audio tracks with a video asset to viewers in a digital broadcast cable television system (202) operated by a cable operator, said video asset comprising an advertisement, said method comprising the steps of:
generating viewer target group identification numbers from available commercial databases regarding viewers;
inserting a plurality of audio tracks with viewer target group identification numbers in the video asset, independent of the cable operator, to form a cable signal;
associating each of said plurality of audio tracks with at least one of said viewer target group identification numbers in said cable signal;
providing each viewer with a set top box (204) having a single viewer target group identification number that corresponds to that viewer and storing said single viewer target group identification number in said set top box (204);
transmitting said cable signal over the digital broadcast cable television system (202) for receipt by each of said set top boxes (204); and
each of said set top boxes (204) comparing said viewer target group identification numbers in said received cable signal with its respective single viewer identification number to select one of said plurality of audio tracks to play out with the video asset.

7. The method of Claim 6 further comprising the step of updating said viewer target group identification numbers based on changes in the commercial databases regarding viewers.

8. The method of Claim 7 further comprising the step of updating each of said single viewer target group identification numbers stored in said set top boxes (204) based on changes in the commercial databases regarding viewers.

## Patentansprüche

1. Toninhaltzielsystem zum Bereitstellen mehrerer unterschiedlicher Tonspuren mit einem Bildprogramm für Zuschauer in einem digitalen Übertragungs-Kabelfernsehsystem (202), das von einem Kabeloperator betrieben wird, wobei das Bildprogramm eine Werbung aufweist und das Toninhaltzielsystem umfasst:
ein Primärkanalprogrammvorbereitungsmittel (210) zum Einfügen einer Mehrzahl von Tonspuren und korrespondierender Zuschauerzielgruppen-Identifikationsnummern in das Bildprogramm, unabhängig von dem Kabeloperator, um ein Kabelsignal zu erzeugen, wobei das Primärkanalprogrammvorbereitungsmittel (210) an das Kabelfernsehsystem (202) angeschlossen ist;
mindestens eine Set-Top-Box (204), die eine vorbestimmte Zuschauerzielgruppen-Identifikationsnummer gespeichert hat,
wobei die mindestens eine Set-Top-Box (204) an das Kabelfernsehsystem (202) zum Empfang des Kabelsignals angeschlossen ist;
die mindestens eine Zuschauer-Set-Top-Box (204) ein Anwendungsprogramm aufweist, das automatisch das Kabelsignal abfragt und dann die vorbestimmte Zuschauerzielgruppen-Identifikationsnummer mit den korrespondierenden Zuschauerzielgruppen-Identifikationsnummern in dem Kabelsignal vergleicht, um auszuwählen, welche Tonspur mit dem Bildprogramm ausgespielt wird.

2. Toninhaltzielsystem gemäß Anspruch 1, das außerdem ein Begleitkanalprogrammvorbereitungsmittel (211) aufweist, wobei das Begleitkanalprogrammvorbereitungsmittel (211) zusätzliche Tonspuren und die korrespondierenden Zuschauerzielgruppen-Identifikationsnummern in das Bildprogramm einfügt, um das Kabelsignal zu erstellen, wobei das Anwendungsprogramm die vorbestimmte Zuschauerzielgruppen-Identifikationsnummer mit den korrespondierenden Zuschauerzielgruppen-Identifikationsnummern des Kabelsignals vergleicht, um eine der Tonspuren und zusätzliche Tonspuren zum Ausspielen mit dem Bildprogramm auszuwählen.

3. System gemäß Anspruch 1, das außerdem umfasst: ein Mittel zum Erstellen der vorbestimmten Zuschauerzielgruppen-Identifikationsnummer, wobei das Erstellungsmittel an die mindestens eine Set-Top-Box 204 angeschlossen ist zum Übertragen der vorbestimmten Zuschauerzielgruppen-Identifikationsnummer an die mindestens eine Zuschauer-Set-Top-Box (204).

4. System gemäß Anspruch 3, wobei das Erstellungsmittel die vorbestimmte Zuschauerzielgruppen-Identifikationsnummer aus verfügbaren kommerziellen Datenbanken aktualisiert.

5. System gemäß Anspruch 1, wobei das Anwendungsprogramm in der mindestens einen Zuschauer-Set-Top-Box (204) eine Tonspur zum Ausspielen mit dem Bildprogramm auswählt ohne einen Zuschauereingriff zu benötigen.

6. Verfahren zum Bereitstellen mehrerer unterschiedlicher Tonspuren mit einem Bildprogramm an Zuschauer in einem digitalen Übertragungs-Kabelfernsehsystem (202), das von einem Kabeloperator betrieben wird, wobei das Bildprogramm eine Werbung aufweist und das Verfahren die folgenden Schritte umfasst:
Erstellen von Zuschauerzielgruppen-Identifikationsnummern aus verfügbaren kommerziellen zuschauerbezogenen Datenbanken;
Einfügen einer Mehrzahl von Tonspuren mit Zuschauerzielgruppen-Identifikationsnummern in das Bildprogramm, unabhängig von dem Kabeloperator, um ein Kabelsignal zu erzeugen;
Verknüpfen jeder einzelnen der Mehrzahl der Tonspuren mit mindestens einer der Zuschauerzielgruppen-Identifikationsnummern des Kabelsignals;
Ausrüsten jedes Zuschauers mit einer Set-Top-Box (204), die eine einzelne Zuschauerzielgruppen-Identifikationsnummer aufweist, die dem Zuschauer entspricht und Abspeichern der einzelnen Zuschauerzielgruppen-Identifikationsnummern in der Set-Top-Box (204);
Übertragen des Kabelsignals über das digitale Übertragungs-Kabelfernsehsystem (202) für den Empfang durch jede der Set-Top-Boxen (204); und
jede der Set-Top-Boxen (204) vergleicht die Zuschauerzielgruppen-Identifikationsnummern in dem empfangenen Kabelsignal mit der entsprechenden einzelnen Zuschauer-Identifikationsnummer, um eine aus der Mehrzahl der Tonspuren zum Ausspielen mit dem Bildprogramm auszuwählen.

7. Verfahren gemäß Anspruch 6, das weiterhin den Schritt des Aktualisierens der Zuschauerzielgruppen-Identifikationsnummern basierend auf Änderungen der die Zuschauer betreffenden kommerziellen Datenbanken aufweist.

8. Verfahren gemäß Anspruch 7, das weiterhin folgenden Schritt aufweist: Aktualisieren jeder der in den Set-Top-Boxen (204) gespeicherten einzelnen Zuschauerzielgruppen-Identifikationsnummern basierend auf Änderungen der die Zuschauer betreffenden kommerziellen Datenbanken.

## Revendications

1. Système de ciblage du contenu audio pour fournir plusieurs pistes audio simultanées avec un programme vidéo à des téléspectateurs dans un système (202) de télévision numérique à diffusion par le câble qui est géré par un opérateur de diffusion par le câble, ledit programme vidéo comprenant un message publicitaire, ledit système de ciblage du contenu audio comprenant :
des moyens (210) de préparation d'un programme de canal primaire pour insérer une pluralité de pistes audio et une pluralité de numéros correspondants d'identification de groupes ciblés de téléspectateurs, d'une manière ne dépendant pas de l'opérateur de diffusion par le câble, pour former un signal de câble, lesdits moyens (210) de préparation d'un programme de canal primaire étant couplés au système (202) de télévision à diffusion par le câble ;
au moins une boîte terminale de réglage (204) dans laquelle un numéro prédéterminé d'identification d'un groupe de téléspectateurs ciblés est mémorisé ;
ladite au moins une boîte terminale de réglage (204) étant couplée au système (202) de télévision à diffusion par le câble pour recevoir ledit signal de câble ;
ladite au moins une boîte terminale de réglage (204) de téléspectateur comprenant un programme d'application qui interroge de manière automatique ledit signal de câble et qui compare ensuite ledit numéro prédéterminé d'identification d'un groupe de téléspectateurs ciblés auxdits numéros correspondants d'identification d'un groupe de téléspectateurs ciblés qui sont contenus dans ledit signal de câble pour sélectionner celle des pistes audio qui doit être diffusée avec le programme vidéo.

2. Système selon la revendication 1, comprenant en outre des moyens (211) de préparation d'un programme de canal auxiliaire, lesdits moyens (211) de préparation d'un programme de canal auxiliaire insérant des pistes audio additionnelles et lesdits numéros correspondants d'identification d'un groupe de téléspectateurs ciblés dans le programme vidéo pour former ledit signal de câble et dans lequel ledit programme d'application compare ledit numéro prédéterminé d'identification d'un groupe de téléspectateurs ciblés aux numéros correspondants d'identification d'un groupe de téléspectateurs ciblés qui se trouvent dans ledit signal de câble pour sélectionner une desdites pistes audio et pistes audio additionnelles qui doit être diffusée avec le programme vidéo.

3. Système selon la revendication 1 comprenant en outre des moyens pour générer ledit numéro prédéterminé d'identification d'un groupe de téléspectateurs ciblés, lesdits moyens de génération étant couplés à ladite au moins une boîte terminale de réglage (204) pour transmettre ledit numéro prédéterminé d'identification d'un groupe de téléspectateurs ciblés à ladite au moins une boîte terminale de réglage (204) de téléspectateur.

4. Système selon la revendication 3, dans lequel lesdits moyens de génération mettent à jour ledit numéro prédéterminé d'identification d'un groupe de téléspectateurs ciblés à partir de bases de données commerciales disponibles.

5. Système selon la revendication 1, dans lequel ledit programme d'application qui se trouve dans ladite au moins une boîte terminale de réglage (204) sélectionne une piste audio qui doit être diffusée avec le programme vidéo sans nécessiter l'intervention du téléspectateur.

6. Procédé pour fournir plusieurs pistes audio simultanées avec un programme vidéo à des téléspectateurs dans un système (202) de télévision numérique à diffusion par le câble qui est géré par un opérateur de diffusion par le câble, ledit programme de vidéo comprenant un message publicitaire, ledit procédé comprenant les étapes suivantes :
générer des numéros d'identification d'un groupe de téléspectateurs ciblés à partir de bases de données commerciales disponibles qui concernent les téléspectateurs ;
insérer, dans le programme vidéo, une pluralité de pistes audio avec des numéros d'identification d'un groupe de téléspectateurs ciblés, d'une manière ne dépendant pas de l'opérateur de diffusion par le câble, pour former un signal de câble ;
associer chacune de ladite pluralité de pistes audio à au moins un desdits numéros d'identification d'un groupe de téléspectateurs ciblés qui se trouvent dans ledit signal de câble;
fournir à chaque téléspectateur une boîte terminale de réglage (204) qui a un numéro unique d'identification d'un groupe de téléspectateurs ciblés qui correspond à ce téléspectateur et mémoriser ce numéro unique d'identification d'un groupe de téléspectateurs ciblés dans ladite boîte terminale de réglage (204) ;
transmettre ledit signal de câble par le système (202) de télévision numérique à diffusion par le câble pour qu'il soit reçu par chacune des boîtes terminales de réglage (204) ; et
chacune desdites boîtes terminales de réglage (204) comparant lesdits numéros d'identification d'un groupe de téléspectateurs ciblés contenus dans ledit signal de câble à son numéro respectif d'identification d'un groupe de téléspectateurs ciblés pour sélectionner une de ladite pluralité de pistes audio qui doit être diffusée avec le programme de télévision.

7. Procédé selon la revendication 6 comprenant en outre l'étape de la mise à jour desdits numéros d'identification d'un groupe de téléspectateurs ciblés en se basant sur des modifications des bases de données commerciales concernant les téléspectateurs.

8. Procédé selon la revendication 7 comprenant en outre l'étape de la mise à jour de chacun desdits numéros uniques d'identification d'un groupe de téléspectateurs ciblés qui sont mémorisés dans lesdites boîtes terminales de réglage (204) en se basant sur des modifications des bases de données commerciales concernant les téléspectateurs.
